# EUROPEAN PATENT SPECIFICATION

(11) **EP 3 460 965 B1**
(45) Date of publication and mention of the grant of the patent: **24.02.2021**
(21) Application number: 17799238.5
(22) Date of filing: 10.05.2017
(51) Int. Cl.: H02K 15/095, H02K 15/04

(54) **WINDING METHOD**
WICKLUNGSVERFAHREN
PROCÉDÉ D'ENROULEMENT

(30) Priority: 18.05.2016 JP 2016099338
(43) Date of publication of application: 27.03.2019
(73) Proprietor: Mitsuba Corporation, Kiryu-shi, Gunma 376-8555 (JP)
(72) Inventor: OHKAWARA Tomoki, Kiryu-shi Gunma 376-8555 (JP); ISHIDA Takahito, Kiryu-shi Gunma 376-8555 (JP); SUGIYAMA Masayuki, Kiryu-shi Gunma 376-8555 (JP)
(74) Representative: Cabinet Laurent & Charras
(86) International application number: PCT/JP2017/017685
(87) International publication number: WO 2017/199813

(56) References cited:
- JP-A- 2007 325 490
- JP-A- 2009 124 906
- JP-A- 2011 091 885
- JP-B2- 5 630 890
- US-B2- 8 146 238

## Description

### TECHNICAL FIELD

The present invention relates to a wire winding method.

### BACKGROUND

Documents JP 5 630890 B2 and US 8 146 238 B2 disclosed wire winding methods using a needle or a flyer as tools for winding a stator core. A wire winding apparatus that winds a coil around teeth of a stator includes a flyer that reels out the coil. The flyer includes a flyer main body and a nozzle that is rotatably attached to the flyer main body. The flyer main body moves around the teeth while reeling out the coil from a front end of the nozzle, and thereby, the coil is wound around each of the teeth.

When the coil is wound around each of the teeth, the flyer becomes a state in which the nozzle is bent by 90° with respect to the flyer main body. On the other hand, when allowing the coil to bridge a space between two predetermined teeth, the flyer becomes a state in which the nozzle is provided to stand at an end part of the flyer main body (a shaft center of the nozzle is directed along an extension direction of the flyer main body).

According to such a configuration, when the coil is wound around each of the teeth, it is possible to allow the nozzle to enter the inside of a slot that is formed between adjacent teeth as much as possible. Further, when allowing the coil to bridge the space between the two predetermined teeth, it is possible to move the flyer while allowing a front end of the nozzle to be in proximity to an end part in an axial direction of a stator as much as possible.

When changing an attitude of the nozzle with respect to the flyer main body, an air cylinder is used in many cases. According to such a configuration, it is possible to promptly change the attitude of the nozzle with respect to the flyer main body.

### [Related Art Documents]

### [Patent Documents]

[Patent Document 1] Japanese Unexamined Patent Application, First Publication No. 2007-325490

### SUMMARY OF INVENTION

### PROBLEMS TO BE SOLVED BY THE INVENTION

A tensile force that is applied on the coil is different between the state in which the nozzle is bent by 90° with respect to the flyer main body and the state in which the nozzle is provided to stand at the end part of the flyer main body. That is, in the state in which the nozzle is bent by 90° with respect to the flyer main body, the coil is also bent, and therefore, the tensile force is increased accordingly.

In this way, due to the difference between the attitudes with respect to the flyer main body, the tensile force that is applied on the coil is different. Therefore, when allowing the coil to bridge the space between the two predetermined teeth, there is a possibility in that the coil may become slack.

The present invention provides a wire winding method capable of preventing a slack of a coil caused by a change of an attitude of a nozzle with respect to a flyer main body The invention is a wire winding method as defined in the independent claim 1. Further embodiments of the invention are defined in the dependent claims 2 and 3.

### MEANS FOR SOLVING THE PROBLEM

A wire winding method according to a first aspect of the present invention is a wire winding method in which, by using a flyer that includes a nozzle which reels out a coil and a flyer main body which rotatably supports the nozzle, the coil is wound around a plurality of teeth of a stator, the method including: a winding step of winding the coil around the teeth by crossing a shaft center of the nozzle with respect to an extension direction of the flyer main body and moving the flyer main body in two directions that are perpendicular with respect to the stator; and a drawing step of allowing the shaft center of the nozzle to be directed along the extension direction of the flyer main body and allowing the coil to bridge a space between predetermined two of the teeth, wherein while transitioning from the winding step to the drawing step and while transitioning from the drawing step to the winding step again, the distance between the stator and a front end of the nozzle is kept constant.

According to such a method, when transitioning from the winding step to the drawing step, it is possible to prevent the coil from being excessively drawn out from the teeth. That is, when performing the drawing step in the state in which the coil is excessively drawn out from the teeth (when changing the attitude of the nozzle with respect to the flyer main body), the coil is maintained to be in a slant state due to the difference between a tensile force that is applied to the coil by the state of the flyer at the time of the winding step and a tensile force that is applied to the coil by the state of the flyer at the time of the drawing step. However, while transitioning from the winding step to the drawing step, by keeping the distance between the stator and the front end of the nozzle constant, it is possible to prevent the coil from being excessively drawn out from the teeth. Therefore, it is possible to prevent the slack of the coil caused by the change of the attitude of the nozzle with respect to the flyer main body.

According to a second aspect of the present invention, in the wire winding method according to the first aspect of the present invention, the stator has a stator core having a circular cylinder shape, and the plurality of teeth are provided to protrude inward in a radial direction from an inner circumferential surface of the stator core.

The wire winding method described above is favorably used for such a stator.

According to a third aspect of the present invention, in the wire winding method according to the first aspect or the second aspect of the present invention, the flyer includes a servomotor, and the nozzle is rotated by the servomotor with respect to the flyer main body.

As in the related art described above, when changing the attitude of the nozzle with respect to the flyer main body by using the air cylinder, it is difficult to keep the distance between the stator and the front end of the nozzle constant with good accuracy while transitioning from the winding step to the drawing step. However, when changing the attitude of the nozzle with respect to the flyer main body by using the servomotor, for example, it is possible to synchronize an operation of driving the flyer main body itself and an operation of the nozzle with each other. Therefore, it becomes possible to keep the distance between the stator and the front end of the nozzle constant with good accuracy while transitioning from the winding step to the drawing step.

The wire winding method according to the present invention further includes a stage that supports the stator, a stage drive apparatus that is configured to move the stage in upward and downward directions, and a flyer drive apparatus that is configured to move the flyer main body, wherein the winding step and the drawing step are performed by moving the stage using the stage drive apparatus and moving the flyer main body using the flyer drive apparatus.

According to such a method, it becomes possible to perform further promptly the movement of the flyer main body with respect to the stator. Therefore, it is possible to shorten the job time of the winding step and the drawing step.

### ADVANTAGE OF THE INVENTION

According to the wire winding method described above, it is possible to prevent the coil from being excessively drawn out from the teeth when transitioning from the winding step to the drawing step. Therefore, it is possible to prevent the slack of the coil caused by the change of the attitude of the nozzle with respect to the flyer main body.

### BRIEF DESCRIPTION OF THE DRAWINGS

FIG. 1 is a schematic configuration view of a wire winding apparatus in an embodiment of the present invention.
FIG. 2 is a perspective view showing a state in which a stator is set to the wire winding apparatus in the embodiment of the present invention.
FIG. 3 is a view showing a behavior of a flyer when rotating a coil around the stator in the embodiment of the present invention.
FIG. 4 is a view showing an operation of the flyer and a stator 2 in a winding step in the embodiment of the present invention, and parts (a) to (d) show a behavior of the flyer and the stator in the course of the operation.

### DESCRIPTION OF THE EMBODIMENTS

Next, an embodiment of the present invention is described with reference to the drawings.

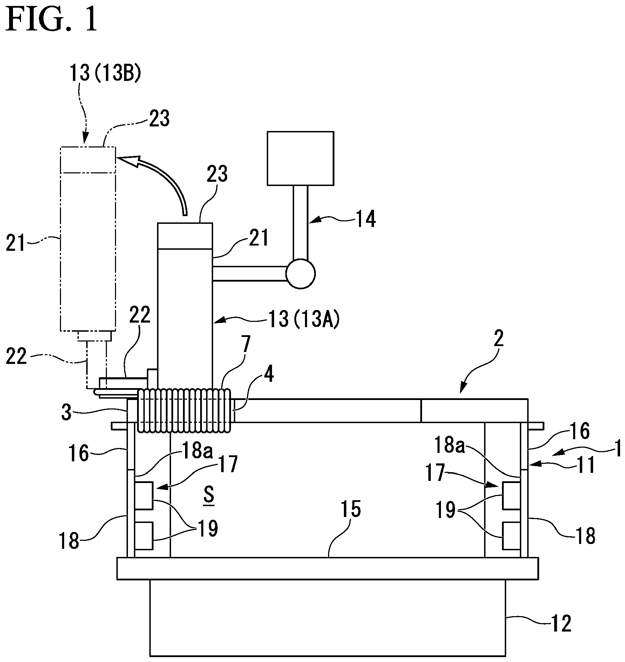

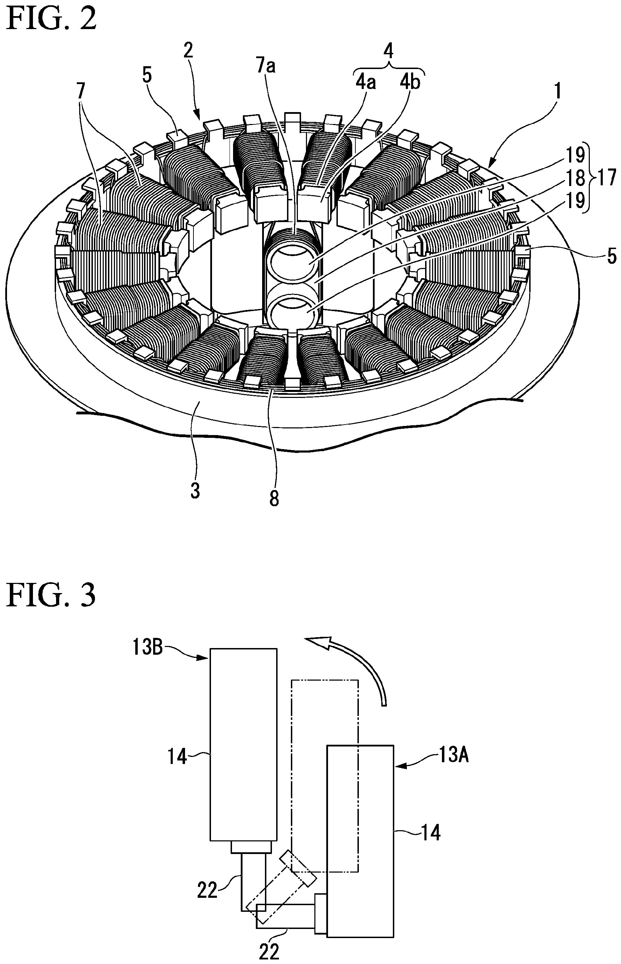

FIG. 1 is a schematic configuration view of a wire winding apparatus 1. FIG. 2 is a perspective view showing a state in which a stator 2 is set to the wire winding apparatus 1.

As shown in FIG. 1 and FIG. 2, the stator 2 includes a stator core 3 having a circular cylinder shape and a plurality of teeth 4 that protrude toward a center in a radial direction from an inner circumferential surface of the stator core 3. The teeth 4 are arranged at an equal interval in a circumferential direction. Each of the teeth 4 is assigned to a U-phase, a V-phase, and a W-phase in this order. That is, the stator 2 is a stator that is used for a brushless motor having a three-phase structure.

Each of the teeth 4 is formed in a substantially T shape when seen from an axial direction and is constituted of a teeth main body 4a that extends along a radial direction and a flange part 4b that extends along a circumferential direction from a front end of the teeth main body 4a. An insulator 5 that is made of an insulation material such as a plastic is attached to the teeth main body 4a.

In the stator 2, a slot 6 is formed between teeth 4 that are adjacent to each other in the circumferential direction. A coil 7 that is inserted via the slot 6 is wound around each of the teeth 4 on the insulator 5 according to a concentrated winding method. Such a winding job of the coil 7 to each of the teeth 4 is performed using the wire winding apparatus 1.

In the following description, the axial direction of the stator 2 is simply referred to as an axial direction or a vertical direction, the radial direction of the stator 2 is simply referred to as a radial direction, and the circumferential direction of the stator 2 that is perpendicular to the axial direction and the radial direction is simply referred to as a circumferential direction.

### (Wire winding apparatus)

The wire winding apparatus 1 includes a stage 11 that supports the stator 2, a stage drive apparatus 12 that drives the stage 11, a flyer 13 for rotating the coil 7 around the stator 2, and a flyer drive apparatus 14 that drives the flyer 13.

The stage 11 has a base part 15 that is arranged on the stage drive apparatus 12 and a leg part 16 that is provided to stand on the base part 15. The stator 2 is set on the leg part 16. Therefore, a sufficient space S is ensured between the stator 2 and the base part 15.

Three winded parts 17 are provided on the base part 15 at an equal interval in the circumferential direction at a position that corresponds to a position directly below the stator 2 (directly below the teeth 4), that is, in a region to which the stator 2 (the teeth 4) is projected downward in the axial direction. The winded part 17 is a part to which the coil 7 that is drawn out from each of the teeth 4 is wound and which forms a terminal part 7a of the coil 7.

The terminal part 7a is a part that is electrically connected to an external electric source and that supplies a current to the coil 7 of each phase (U-phase, V-phase, and W-phase). Therefore, the winded part 17 is required for each phase, and three winded parts are required in the present embodiment.

The winded part 17 is constituted of a support plate 18 that is provided to stand directly upward from the base part 15 and two winded main body parts 19 that are provided on a surface 18a on an inner side in the radial direction of the support plate 18. The winded main body part 19 is formed in a substantially column shape and is arranged such that the axial direction of the winded main body part 19 is directed along the thickness direction of the support plate 18. Further, the winded main body parts 19 are arranged to be aligned in the vertical direction and are provided so as to be capable of approaching and being separated from each other.

The flyer 13 includes a flyer main body 21, a nozzle 22 that is rotatably provided on a lower end of the flyer main body 21 and that reels out the coil 7 from a front end, and a servomotor 23 that is provided on the flyer main body 21 and that drives the nozzle 22. The flyer drive apparatus 14 is attached to the flyer main body 21. The flyer drive apparatus 14 is driven such that the flyer 13 is rotated around each of the teeth 4. In this case, the coil 7 is reeled out from the front end of the nozzle 22, and thereby, the coil 7 is wound around each of the teeth 4.

### (Wire winding method of coil)

With reference to FIG. 2 to FIG. 4, a wire winding method of the coil 7 to each of the teeth 4 is described in detail.

FIG. 3 is a view showing a behavior of the flyer 13 when rotating the coil 7 around the stator 2.

The wire winding method of the coil 7 includes mainly two steps which are a winding step and a drawing step. In the winding step, the coil 7 is wound around each of the teeth 4. In the drawing step, the coil 7 is allowed to bridge a space between predetermined teeth 4, and a bridge wire 8 (refer to FIG. 2) is formed.

In FIG. 3, as indicated by a reference numeral 13A, in the winding step, the nozzle 22 is in a state of being bent by 90° with respect to the flyer main body 21 (hereinafter, referred to as a 90° attitude). By such a 90° attitude, it is possible to rotate the coil 7 around the teeth 4 while inserting the nozzle 22 deeply into the slot 6.

In FIG. 3, as indicated by a reference numeral 13B, in the drawing step, the nozzle 22 is provided to stand with respect to the flyer main body 21, that is, the shaft center of the nozzle 22 becomes a state of being directed along the extension direction of the flyer main body 21 (hereinafter, referred to as a standing attitude). By such a standing attitude, it is possible to form the bridge wire 8 while allowing the front end of the nozzle 22 to be in proximity to the end part in the axial direction of the stator 2 as much as possible.

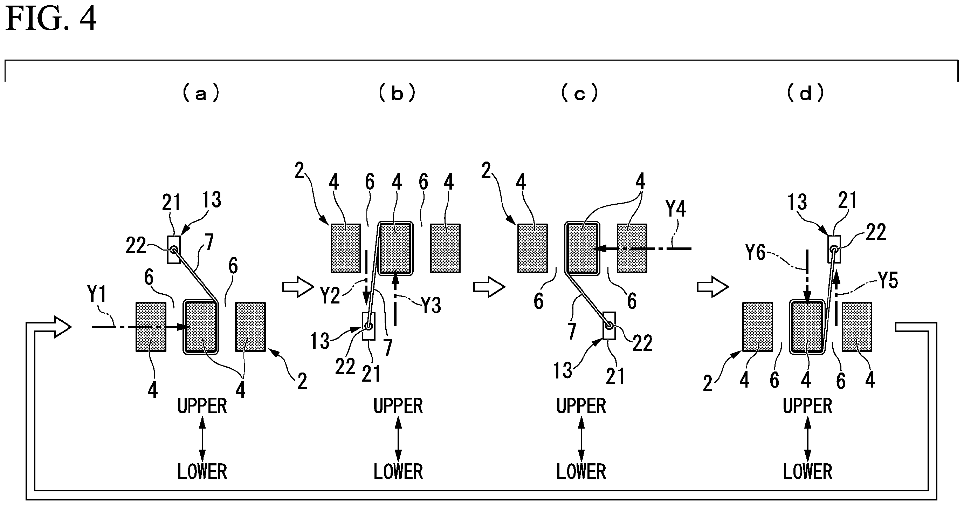

FIG. 4 is a view showing an operation of the flyer 13 and the stator 2 in the winding step, and parts (a) to (d) show a behavior of the flyer 13 and the stator 2 in the course of the operation. In FIG. 4, it is assumed that the wire winding apparatus 1 is arranged such that the upper side of the drawing is the upper side of the apparatus, and the lower side of the drawing is the lower side of the apparatus.

As shown in FIG. 4, the winding step and the drawing step are performed while swirling and vertically moving the stator 2 by the stage drive apparatus 12 and while vertically moving the flyer 13 by the flyer drive apparatus 14.

More specifically, in the winding step, the flyer 13 is made to be in the 90° attitude, and as shown in FIG. 4 (a), when rotating the coil 7 around the end part in the axial direction of the teeth 4, the flyer 13 is moved to one (an upper end in FIG. 4 (a)) of both ends in the axial direction of the stator 2. In this state, the stator 2 is swirled to one direction (the rightward direction in FIG. 4 (a), refer to an arrow Y1). Thereby, the coil 7 is wound around an upper end part in the axial direction of the teeth 4. Then, at a time point when the flyer 13 is positioned directly above the slot 6, the swirl of the stator 2 is stopped.

In the following description, states are described in sequence from a state, as shown in FIG. 4 (a), in which the flyer 13 is positioned above the stator 2.

Subsequently, as shown in FIG. 4 (b), each of the stator 2 and the flyer 13 is moved along the vertical direction and toward a direction in which the stator 2 and the flyer 13 approach to each other (refer to arrows Y2, Y3 in FIG. 4 (b)). Then, the flyer 13 is moved above the slot 6 along the vertical direction. Further, the flyer 13 is moved to a position below the stator 2. Thereby, the coil 7 is wound around on one side in the circumferential direction of the teeth 4.

Subsequently, as shown in FIG. 4 (c), the stator 2 is swirled to another direction (a left direction in FIG. 4 (c), refer to an arrow Y4). Thereby, the coil 7 is wound around a lower end part in the axial direction of the teeth 4. Then, at a time point when the flyer 13 is positioned directly below the slot 6, the swirl of the stator 2 is stopped.

Then, as shown in FIG. 4 (d), each of the stator 2 and the flyer 13 is moved toward the direction in which the stator 2 and the flyer 13 approach to each other again (refer to arrows Y5, Y6 in FIG. 4 (d)). Then, the flyer 13 is moved above the slot 6 along the vertical direction. Further, the flyer 13 is moved to a position above the stator 2. Thereby, the coil 7 is wound around on the other side in the circumferential direction of the teeth 4. Then, by repeating this in sequence, the coil 7 is wound around the teeth 4 at a predetermined number of times.

After the coil 7 is wound around one of the teeth 4 at a predetermined number of times, the stator 2 is swirled to an a predetermined adjacent one of the teeth 4 (another of the teeth 4 having the same phase as the one of the teeth 4 of which winding of the coil 7 is finished). Thereby, the coil 7 is hanged along the circumferential direction of the stator core 3, and the bridge wire 8 is formed at the upper end in the axial direction of the stator core 3 (drawing step).

At the time point of the drawing step being finished, the front end of the nozzle 22 is positioned at a base of the teeth 4 and at a position that is slightly separated from the upper end in the axial direction of the stator 2. When transitioning from this state to the drawing step, the attitude of the flyer 13 is also changed from the 90° attitude to the standing attitude. In this case, the flyer drive apparatus 14 and the servomotor 23 that is provided on the flyer main body 21 are driven while being synchronized, and thereby, as shown in FIG. 1 and FIG. 3, the attitude of the flyer 13 is changed such that the front end position of the nozzle 22 is not displaced.

The stage drive apparatus 12 may be driven in place of the flyer drive apparatus 14, and the attitude of the flyer 13 may be changed while synchronizing the stage drive apparatus 12 and the servomotor 23. Alternatively, both the flyer drive apparatus 14 and the stage drive apparatus 12 may be driven, and the attitude of the flyer 13 may be changed while synchronizing all of the flyer drive apparatus 14, the stage drive apparatus 12, and the servomotor 23. That is, the attitude of the flyer 13 may be changed such that the front end position of the nozzle 22 is not displaced.

After the drawing step is finished, the winding step of predetermined teeth 4 is performed again. In this case, the transition from the drawing step to the winding step is performed according to a procedure similar to the procedure when transitioning from the winding step to the drawing step. That is, the transition from the drawing step to the winding step is performed such that the front end position of the nozzle 22 is not displaced.

In this way, the coil 7 is wound around all of the teeth 4 having the same phase while repeating the winding step and the drawing step, and then, the flyer 13 is moved below the stator 2 via a center in the radial direction of the stator 2. Then, the coil 7 is wound so as to straddle two winded main body parts 19 of the winded part 17, and the terminal part 7a that is arranged in a substantially oval shape is formed.

The winding operation of the coil 7 on the winded part 17 when forming the terminal part 7a is the same as the operation of the stator 2 and the flyer 13 in the winding step described above. That is, the coil 7 is wound around the winded part 17 while driving both the stage drive apparatus 12 and the flyer drive apparatus 14.

After forming the terminal part 7a, the winding step and the drawing step are performed again with respect to the teeth 4 having another phase. Then, by using the winded part 17 again, the terminal part 7a of the coil 7 is formed. Then, by performing this repeatedly, the coil 7 having a three-phase structure is wound around each of the teeth 4.

When forming the terminal part 7a for each phase, the coil 7 may be once cut at a time point when the terminal part 7a is formed, and then, the coil 7 may be wound around the teeth 4 of another phase. Alternatively, after completing the winding job of the coil 7 onto the teeth 4 of all of three phases and the forming of the terminal part 7a, the coil 7 may be cut such that the coil 7 for each phase is independent.

In this way, in the embodiment described above, in the wire winding method of the coil 7, while transitioning from the winding step to the drawing step and while transitioning from the drawing step to the winding step again, the attitude of the flyer 13 is changed such that the front end position of the nozzle 22 is not displaced. In other words, while transitioning from the winding step to the drawing step and while transitioning from the drawing step to the winding step again, the distance between the stator 2 and the front end of the nozzle 22 is kept constant.

Therefore, when transitioning from the winding step to the drawing step, it is possible to prevent the coil 7 from being excessively drawn out from the teeth 4. That is, when performing the drawing step in the state in which the coil 7 is excessively drawn out from the teeth 4 (when changing the attitude of the flyer 13), the coil 7 is maintained to be in a slant state due to the difference between a tensile force that is applied to the coil 7 by the 90° attitude of the flyer 13 at the time of the winding step and a tensile force that is applied to the coil 7 by the standing attitude of the flyer 13. However, by employing the wire winding method of the coil 7 described above, it is possible to prevent the coil 7 from being excessively drawn out from the teeth 4. Therefore, it is possible to prevent the slack of the coil 7 caused by the change of the attitude of the nozzle 22 with respect to the flyer main body 21.

Further, when rotating the coil 7 around the stator 2 in which a plurality of teeth 4 are provided to protrude inward in a radial direction from an inner circumferential surface of the stator core 3 having a circular cylinder shape, by allowing the flyer 13 to be in the 90° attitude, it is possible to rotate the coil 7 around the teeth 4 while inserting the nozzle 22 deeply into the slot 6. Therefore, it is possible to improve the volume occupation rate of the coil 7 to the stator 2.

Further, the servomotor 23 is provided on the flyer main body 21, and the attitude of the flyer 13 is changed by the servomotor 23.

As in the related art, when changing the attitude of the flyer 13 by using the air cylinder, it is difficult to keep the distance between the stator 2 and the front end of the nozzle 22 constant with good accuracy while transitioning from the winding step to the drawing step. However, when changing the attitude of the flyer 13 by using the servomotor 23, it is possible to easily synchronize the stage drive apparatus 12 or the flyer drive apparatus 14 and the servomotor 23 while transitioning from the winding step to the drawing step. Therefore, it becomes possible to keep the distance between the stator 2 and the front end of the nozzle 22 constant with good accuracy.

Further, the winding step and the drawing step are performed while swirling and vertically moving the stator 2 by the stage drive apparatus 12 and while vertically moving the flyer 13 by the flyer drive apparatus 14. Therefore, it becomes possible to further promptly perform the movement of the flyer 13 (the flyer main body 21) with respect to the stator 2. Therefore, it is possible to shorten the job time of the winding step and the drawing step.

Further, the winded part 17 for forming the terminal part 7a using the coil 7 that is drawn out from each of the teeth 4 is provided on the stage 11 of the wire winding apparatus 1. The winded part 17 is arranged at a position that corresponds to a position directly below the stator 2 (directly below the teeth 4) in the base part 15, that is, in a region to which the stator 2 (the teeth 4) is projected downward in the axial direction.

Therefore, it is possible to form the terminal part 7a in the region to which the stator 2 is projected in the axial direction. That is, it is possible to prevent the weight on an outer circumferential part side of the stator 2 from being increased by forming the terminal part 7a as in the related art. Accordingly, it is possible to prevent an inertia that is applied to the stage 11 at the time of the winding job of the coil 7 from being increased, and it is possible to prevent an increase in the winding job time of the coil 7. Further, it is also possible to prevent a size increase of the wire winding apparatus 1.

Further, the winded part 17 is constituted of the support plate 18 and the two winded main body parts 19 that are provided on the support plate 18. Then, the coil 7 is wound so as to straddle the two winded main body parts 19, and thereby, the terminal part 7a that is arranged in a substantially oval shape is formed. By arranging the terminal part 7a in a substantially oval shape, it is possible to prevent the terminal part 7a from being bent locally. Further, only by changing the distance between the two winded main body parts 19, it is possible to adjust the length of the terminal part 7a that is wound around the winded part 17.

Further, in the drawing step, the bridge wire 8 is formed at the upper end in the axial direction of the stator core 3, and, on the other hand, the terminal part 7a of the coil 7 is formed at a lower position in the axial direction of the stator core 3. In this way, each of the bridge wire 8 and the terminal part 7a is positioned at the opposite side of each other in the axial direction of the stator core 3, and therefore, when forming the terminal part 7a, it is possible to prevent the terminal part 7a and the bridge wire 8 from coming into contact with each other. Therefore, it becomes possible to improve the drawing workability of the coil 7.

The present invention is not limited to the embodiment described above, and a variety of changes can be added to the embodiment described above without departing from the scope of the invention as defined in the claims.

Further, the above embodiment is described using an example in which the stator 2 around which the coil 7 is wound by the wire winding apparatus 1 is used for a brushless motor having a three-phase structure. However, the embodiment is not limited thereto, and it is possible to apply the wire winding apparatus 1 to a stator of a variety of multiphase motors.

For example, the configuration of the wire winding apparatus 1 can be employed not only for the stator of the brushless motor but also for an armature of a motor having a brush. The armature of the motor having a brush is not specifically shown in the drawings but includes a rotation shaft, an armature core which is externally fitted to and fixed to the rotation shaft and around which the coil 7 is wound, and a commutator which is externally fitted to and fixed to the rotation shaft, to which the terminal part 7a of a coil is connected, and with which a brush is in slidably contact.

When inserting the nozzle 22 of the flyer 13 in a space (below a neck of the commutator) between the armature core and the commutator, the nozzle 22 may be a state (hereinafter, referred to as a 45° attitude, and, for example, refer to a two-dot chain line in FIG. 3) of being bent by 45° with respect to the flyer main body 21. The 45° attitude is available because the servomotor 23 is used. Further, by the 45° attitude, it is possible to insert the front end of the nozzle 22 into a deep position below the neck of the commutator, and it is possible to improve the volume occupation rate of the coil 7 to the armature core. Further, it is possible to insert the front end of the nozzle 22 into a deep position below the neck of the commutator while setting the length of the nozzle 22 to be short.

Further, the above embodiment is described using an example in which the winded part 17 is constituted of the support plate 18 and the two winded main body parts 19 that are provided on the support plate 18. The above embodiment is described using an example in which the coil 7 is wound so as to straddle the two winded main body parts 19, and thereby, the terminal part 7a that is arranged in a substantially oval shape is formed. However, the embodiment is not limited thereto, and the winded part 17 may not be capable of forming the terminal part 7a in an oval shape. For example, the winded part 17 may be constituted of one winded main body part 19. Further, the number of the winded main body part 19 may be one, and the winded main body part 19 may be formed in an oval shape in a cross-section.

Further, the above embodiment is described using an example in which three winded parts 17 are provided at an equal interval in the circumferential direction at a position that corresponds to a position directly below the stator 2 (directly below the teeth 4), that is, in a region to which the stator 2 (the teeth 4) is projected downward in the axial direction. However, the embodiment is not limited thereto, and the winded part 17 may be arranged at a position that corresponds to a position directly above the stator 2 (directly above the teeth 4). Further, the number of the winded part 17 may be set in accordance with the number of phases of the stator 2.

### [Industrial Applicability]

According to the wire winding method described above, it is possible to prevent the coil from being excessively drawn out from the teeth when transitioning from the winding step to the drawing step. Therefore, it is possible to prevent the slack of the coil caused by the change of the attitude of the nozzle with respect to the flyer main body.

### DESCRIPTION OF THE REFERENCE SYMBOLS

- 1: wire winding apparatus
- 2: stator
- 3: stator core
- 4: teeth
- 6: slot
- 7: coil
- 7a: terminal part
- 11: stage
- 12: stage drive apparatus
- 13: flyer
- 14: flyer drive apparatus
- 17: winded part
- 18: support plate
- 19: winded main body part
- 21: flyer main body
- 22: nozzle
- 23: servomotor

## Claims

1. A wire winding method in which, by using a flyer (13) that comprises a nozzle (22) which reels out a coil (7) and a flyer main body (21) which rotatably supports the nozzle (22), the coil (7) is wound around a plurality of teeth (4) of a stator (2), the method comprising:
providing a stage (11) that supports the stator (2);
providing a stage drive apparatus (12) that is configured to move the stage (11) in upward and downward directions;
providing a flyer drive apparatus (14) that is configured to move the flyer main body (21);
a winding step of winding the coil (7) around the teeth (4) by crossing a shaft center of the nozzle (22) with respect to an extension direction of the flyer main body (21) and moving the flyer main body (21) in two directions that are perpendicular with respect to the stator (2); and
a drawing step of allowing the shaft center of the nozzle (22) to be directed along the extension direction of the flyer main body (21) and allowing the coil (7) to bridge a space between predetermined two of the teeth (4),
wherein while transitioning from the winding step to the drawing step and while transitioning from the drawing step to the winding step again, a distance between the stator (2) and a front end of the nozzle (21) is kept constant, and
wherein the winding step and the drawing step are performed by moving the stage (11) using the stage drive apparatus (12) and moving the flyer main body (21) using the flyer drive apparatus (14).

2. The wire winding method according to claim 1,
wherein the stator (2) has a stator core (3) having a circular cylinder shape, and
the plurality of teeth (4) are provided to protrude inward in a radial direction from an inner circumferential surface of the stator core (3).

3. The wire winding method according to claim 1 or 2,
wherein the flyer (13) comprises a servomotor (23), and
the nozzle (22) is rotated by the servomotor (23) with respect to the flyer main body (21).

## Patentansprüche

1. Ein Drahtwickelverfahren, bei dem durch Einsatz eines Flyers (13), der eine Düse (22) umfasst, die eine Spule (7) abwickelt, und eines Flyer- Hauptkörpers(21), der die Düse hält (22), die Spule (7) um mehrere Zähne (4) eines Stators (2) gewickelt wird, dabei umfasst das Verfahren:
die Bereitstellung einer Stufe (11), die den Stator (2) trägt:
die Bereitstellung einer Stufenantriebsvorrichtung (12), dazu konfiguriert, die Stufe (11) in Aufwärts- und Abwärtsrichtung zu bewegen;
die Bereitstellung einer Flyer- Antriebsvorrichtung (14), konfiguriert zur Bewegung des Flyer- Hauptkörpers (21);
einen Wicklungsschritt des Wickelns der Spule (7) um die Zähne (4) herum, durch Kreuzen der Wellenmitte der Düse (22), bezogen auf eine Ausdehnungsrichtung des Flyer- Hauptkörpers (21) und Bewegen des Flyer- Hauptkörpers (21) in zwei Richtungen, die senkrecht zum Stator (2) sind; und
einen Ziehschritt, bei dem die Wellenmitte der Düse (22) entlang der Ausdehnungsrichtung des Flyer- Hauptkörpers (21) geführt werden kann und die Spule (7) einen Raum zwischen zwei vorher bestimmten Zähnen (4) überbrücken kann.
wobei beim Übergang vom Wicklungsschritt zum Ziehschritt und beim erneuten Übergang vom Ziehschritt zum Wicklungsschritt der Abstand zwischen dem Stator (2) und einem vorderen Ende der Düse (22) konstant gehalten wird, und
wobei der Wicklungsschritt und der Ziehschritt dadurch durchgeführt werden, dass die Stufe (11) unter Verwendung der Stufenantriebsvorrichtung (12) bewegt wird und der Flyer- Hauptkörper (21) unter Verwendung der Flyer- Antriebsvorrichtung (14) bewegt wird.

2. Das Drahtwickelverfahren nach Anspruch 1,
wobei der Stator (2) einen Statorkern (3) mit einer ringförmigen Zylinderform aufweist,
und
die Vielzahl von Zähnen (4) so vorgesehen ist, dass diese in radialer Richtung von einer Innenumfangsfläche des Statorkerns (3) nach innen, reichen.

3. Das Drahtwickelverfahren nach Anspruch 1 oder 2,
wobei der Flyer (13) einen Servomotor (23) enthält, und
die Düse (22) vom Servomotor (23), bezogen auf den Flyer- Hauptkörper (21), gedreht wird.

## Revendications

1. Procédé d'enroulement de fil dans lequel, en utilisant une ailette (13) qui comprend une buse (22) qui déroule une bobine (7) et un corps principal d'ailette (21) qui supporte de façon rotative la buse (22), la bobine (7) est enroulée autour d'une pluralité de dents (4) d'un stator (2), le procédé comprenant les étapes suivantes :
fournir un plateau (11) qui supporte le stator (2) ;
fournir un appareil d'entraînement de plateau (12) qui est configuré de manière à déplacer le plateau (11) dans les directions vers le haut et vers le bas ; et
fournir un appareil d'entraînement d'ailette (14) qui est configuré de manière à déplacer le corps principal d'ailette (21) ;
et comprenant en outre :
une étape d'enroulement pour enrouler la bobine (7) autour des dents (4) en traversant un centre d'arbre de la buse (22) par rapport à une direction d'extension du corps principal d'ailette (21) et en déplaçant le corps principal d'ailette (21) dans deux directions qui sont perpendiculaires par rapport au stator (2) ; et
une étape d'étirage pour permettre au centre d'arbre de la buse (22) d'être dirigé le long de la direction d'extension du corps principal d'ailette (21) et pour permettre à la bobine (7) de combler un espace entre deux dents prédéterminées des dents (4),
dans lequel, pendant le passage de l'étape d'enroulement à l'étape d'étirage et pendant le passage de l'étape d'étirage à l'étape d'enroulement à nouveau, une distance entre le stator (2) et une extrémité avant de la buse (22) est maintenue constante ; et
dans lequel l'étape d'enroulement et l'étape d'étirage sont exécutées en déplaçant le plateau (11) en utilisant l'appareil d'entraînement de plateau (12) et en déplaçant le corps principal d'ailette (21) en utilisant l'appareil d'entraînement d'ailette (14).

2. Procédé d'enroulement de fil selon la revendication 1,
dans lequel le stator (2) comprend un noyau de stator (3) qui présente une forme cylindrique circulaire, et
la pluralité de dents (4) sont disposées de manière à faire saillie vers l'intérieur dans une direction radiale à partir d'une surface circonférentielle intérieure du noyau de stator (3).

3. Procédé d'enroulement de fil selon la revendication 1 ou 2,
dans lequel l'ailette (13) comprend un servomoteur (23), et
la buse (22) est mise en rotation par le servomoteur par rapport au corps principal d'ailette (21).
